# EUROPEAN PATENT SPECIFICATION

(11) **EP 0 547 351 B1**
(45) Date of publication and mention of the grant of the patent: **08.05.1996**
(21) Application number: 92118820.7
(22) Date of filing: 03.11.1992
(51) Int. Cl.: B30B 1/26

(54) **Apparatus for adjusting slide stroke of press**
Vorrichtung zum Einstellen des Stösselhubes an einer Presse
Dispositif de réglage de la course du coulisseau dans une presse

(30) Priority: 02.12.1991 JP 318093/91; 12.12.1991 JP 328840/91
(43) Date of publication of application: 23.06.1993
(73) Proprietor: AIDA ENGINEERING, LTD., Sagamihara-shi, Kanagawa-ken (JP)
(72) Inventor: Matsui, Akira, Sagamihara-shi, Kanagawa-ken (JP); Imanishi, Shozo, Sagamihara-shi, Kanagawa-ken (JP)
(74) Representative: Körner, Ekkehard, Dipl.-Ing.

(56) References cited:
- EP-A- 0 250 871
- DE-A- 3 138 812
- DE-C- 293 356
- DE-C- 303 491
- FR-A- 523 439
- FR-A- 2 155 463
- GB-A- 742 141
- GB-A- 760 725

## Description

The invention refers to an apparatus for adjusting the slide stroke of a press as set forth in the preamble of claim 1. An apparatus of this kind is known from DE-A-3 138 812.

The afore-mentioned document shows an eccenter drive with means for adjusting the slide stroke of a press comprising a crank shaft having an eccentric portion onto which an eccentric sheave is rotatably mounted, and on said sheave one end portion of a con'rod is rotatably mounted. The eccentric sheave may be selectively locked to either the eccentric portion of the shaft or to the end portion of the con'rod, whereby the resulting eccentricity of the drive is determined by the rotational position of the eccentric sheave with respect to the eccentric portion of the shaft. A through bore is provided in the eccentric portion, in the eccentric sheave and in the end portion of the crank shaft, and first lock pins are disposed in the through bore within the eccentric portion which are biased radially outwardly by a coil spring so as to bring the first lock pins into engagement with the through bore in the eccentric sheave. Second lock pins are provided in the through bore in the end portion of the con'rod. Said second lock pins may be advanced by associated projection and retraction switching means so as to bring the second lock pins into engagement with the through bore in the eccentric sheave. When inserted into the through bore of the eccentric sheave, the end faces of the second lock pins are situated in the plane which defines the outer circumference of the eccentric portion and the inner circumference of the eccentric sheave, the first lock pins being moved thereby radially against the bias of the coil spring so as to disengage them from the eccentric sheave. Thus, retraction of the first locking pins is not independent of the projection of the second locking pins but is caused thereby.

Further prior art concerning apparatuses for adjusting the slide stroke of a press is known, for example, from JP-B48-4356, JP-B-51-12150, JP-U-55-13039, US-A-4,033,252 and DE-C-3 112 382.

With such conventional art, the construction is complicated, and the component parts have large diameters or large dimensions irrespective of the slide stroke distance. Furthermore, when the slide stroke distance is adjusted, the relationship between the rotational angle of the crankshaft (i.e., the crank angle) and the slide motion changes. This is disadvantageous to the press which is used in association with various equipment, and also disadvantageous in that the die height changes as well.

A slide stroke adjusting apparatus having a built-in switching mechanism of the two-stage switching type, which has small diameters and dimensions and which is capable of maintaining the die height and the slide motion even when the direction of eccentricity is switched, is known from JP-U-3-53827 (US-A-4,846,014, EP-B-0 250 871). A slide stroke adjusting apparatus having an external switching mechanism is known from JP-A-4-105800.

Recently, however, there are stronger demands for improvements in facility economy, increases in working precision, and decreases in three-dimensional size. Even with the above-described apparatuses, it is sometimes impossible to sufficiently meet these demands.

Specifically, with an apparatus having a built-in switching mechanism, since a cylinder device having upper and lower pistons is fitted in a through hole which is formed in communication with all three of the eccentric portion, the eccentric sheave and the con'rod and concentrically with the same axis, this construction requires a large number of component parts, and is thus expensive. In addition, the construction requires complicated and very precise machining and assembly. Further, the replacement of the pistons, packings, etc. is a laborious operation.

With an apparatus having an external switching mechanism, since it is necessary to provide a space for allowing the eccentric bush to move in the axial direction of the crankshaft, reductions in size cannot be easily achieved in a narrow interior of the crown. Further, since the rotation gap of the crankshaft bearing makes it essential to provide a gear backlash, the demands for higher precision cannot be easily met.

### SUMMARY OF THE INVENTION

The object of the present invention is to provide an apparatus for adjusting the slide stroke of a press, the apparatus being capable of easily and quickly switching the slide stroke without causing changes in the die height and the slide motion, the apparatus being capable of reducing the size and increasing the rotational speed while assuring a predetermined composite eccentricity amount.

This object is attained by the features of claim 1. Further embodiments of the invention are subject matter of the dependent claims.

In the present invention, a switching force applied from the outside of the crankshaft is transmitted through the switching force transmitting means disposed in the crankshaft to the first projection and retraction switching means, whereby the first projection and retraction switching means is suitably operated to project the first lock pins into the corresponding holes of the eccentric sheave. After this projection, the second projection and retraction switching means is either manually or automatically operated to draw the second lock pins received in the hole of the con'rod from the corresponding hole of the eccentric sheave.

As a result, the eccentric sheave, which has been integral with the con'rod is shifted to a state of being integral with and fixed to the crankshaft without causing any changes in the relative position of the con'rod, the eccentric sheave and the crankshaft in the direction of rotation. In other words, the slide stroke can be switched without causing a change in the die height.

When the eccentric sheave is to be shifted from a state of being integral with the crankshaft to a state of being integral with the con'rod, the second projection and retraction switching means and the first projection and retraction switching means are operated in this order in an opposite manner to the above manner.

With this form of the present invention, since the side of the crankshaft is provided with first lock pins, first projection and retraction switching means for projecting and retracting the first lock pins and a switching force transmitting means disposed in the crankshaft, while the side of the con'rod is provided with second lock pins and second projecting and retracting switching means for projecting and retracting the second lock pins, it is possible to switch the composite amount of eccentricity without changing the position of the eccentric sheave. Thus, it is possible to provide an apparatus for adjusting the slide stroke of a press, the apparatus being capable of quickly and reliably switching the slide stroke without causing changes in the die height, and is also capable of being handled easily and produced at low cost.

### BRIEF DESCRIPTION OF THE DRAWINGS

Fig. 1 is a longitudinal sectional view of the entire construction of an apparatus according to the present invention, the apparatus being shown in its assembled state;
Fig. 2 is a sectional view of the apparatus, taken along a plane perpendicular to the surface of Fig. 1;
Fig. 3 is an exploded perspective view for explaining first projection and retraction switching means; and
Figs. 4A and 4B are views for explaining the operation of the first projection and retraction switching means and a switching force transmitting means.

### DESCRIPTION OF THE PREFERRED EMBODIMENTS

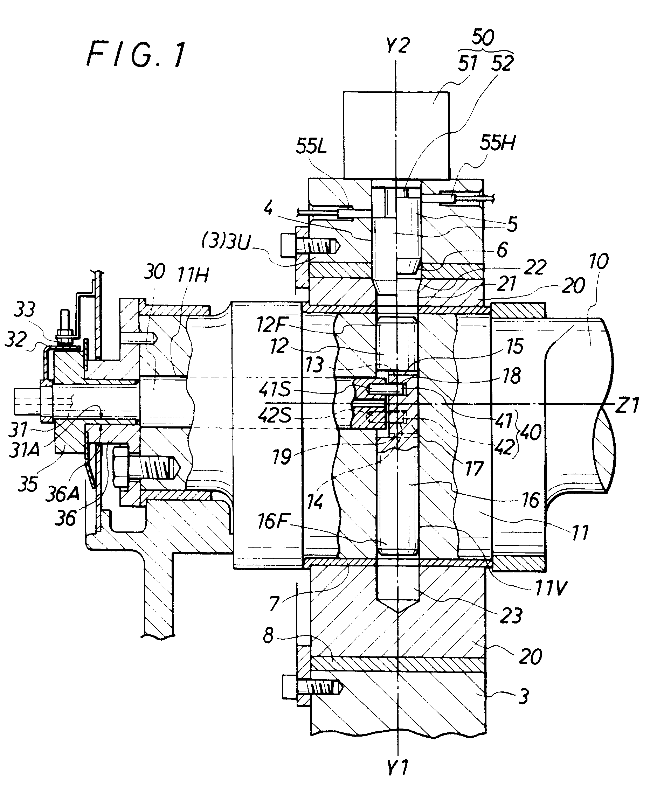

Figs. 1 to 4 show one form of the present invention.

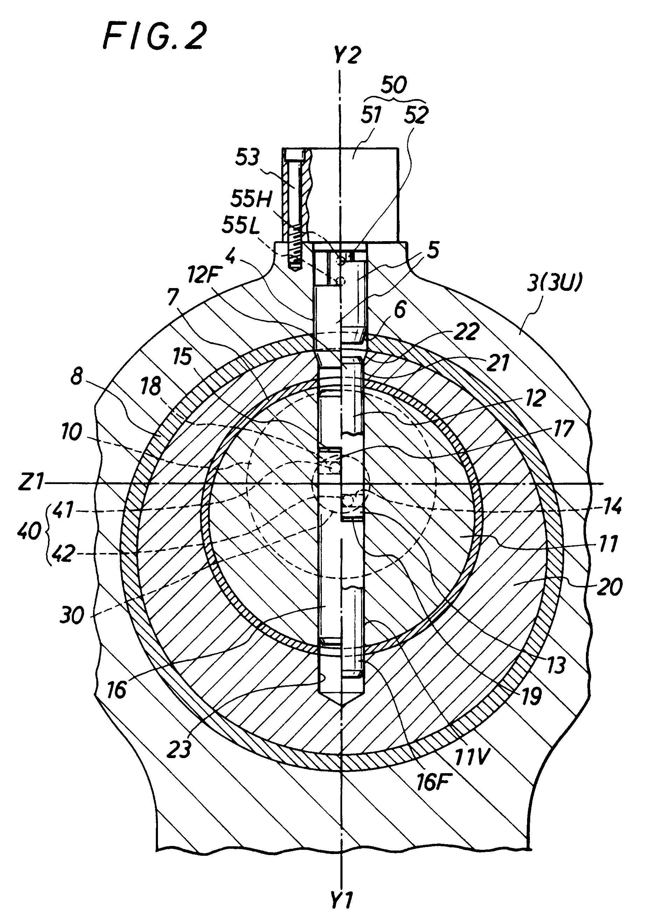

As shown in Figs. 1 and 2, an eccentric portion 11 of a crankshaft 10 and an eccentric sheave 20 are disposed in such a manner that they are eccentric in the same direction with the amount of their eccentricity increasing toward the lowermost position (as viewed in Figs. 1 and 2) where that amount reaches the maximum.

The eccentric portion 11 and the eccentric sheave 20 are formed with a combination of holes, namely, an eccentric-portion vertical hole 11V and an eccentric-sheave first hole 21, which are both coaxial with a vertical axis (a first common axis Y1) intersecting the axis Z1 of the crankshaft 10. On the other hand, an upper end portion 3U of a con'rod 3 and the eccentric sheave 20 are formed with another combination of holes, namely, a con'rod vertical hole 4 and the eccentric-sheave first hole 21, which are both coaxial with another vertical axis (a second common axis Y2) intersecting the axis Z1 of the crankshaft 10.

Although in the illustrated example, the vertical axes Y1 and Y2 are of the same line, and the eccentric-sheave first hole 21 serves as both the eccentric-sheave hole combined with the vertical hole 11V of the eccentric portion 11 and the eccentric-sheave hole combined with the vertical hole 4 of the con'rod 3, this is a mere example, and the present invention is not intended to be limited thereto. For example, the vertical axis Y2 may be inclined by a desired angle to the left or right, as viewed in Fig. 2. Thus, an eccentric-sheave first hole 21 corresponding to the eccentric-portion vertical hole 11V and that corresponding to the con'rod vertical hole 4 may be formed separately.

The vertical hole 11V of the eccentric portion 11 receives a lock pin 12 capable of moving in the vertical hole 11V in the direction of the vertical axis Y1, and capable of projecting into and retracting from the corresponding first hole 21 of the eccentric sheave 20.

When the lock pin 12 is projected into the corresponding first hole 21 of the eccentric sheave 20, the eccentric sheave 20 becomes locked to the eccentric portion 11 of the crankshaft 10. In this condition, since the direction of eccentricity is set as shown in Figs. 1 and 2, the amount of composite eccentricity is expressed as the sum of the amount of eccentricity of the eccentric portion 11 and that of the eccentric sheave 20. Referring to Fig. 9, the sum is expressed as (e1 + e2) where e1 represents the eccentricity amount of the eccentric portion 11 and e2 represents that of the eccentric sheave 20.

The rotational power of the cranshaft 10 is to be transmitted to the con'rod 3 through the eccentric portion 11 and the eccentric sheave 20 integral therewith.

In view of this fact, the embodiment includes another lock pin 16 received in the vertical hole 11V of the eccentric portion 11, and a second hole 23 formed in the eccentric sheave 20 at a position corresponding to the lock pin 16. The pair of lock pins 12 and 16 constitute first lock pins, which allow the eccentric sheave 20 to be very securely locked to the eccentric portion 11.

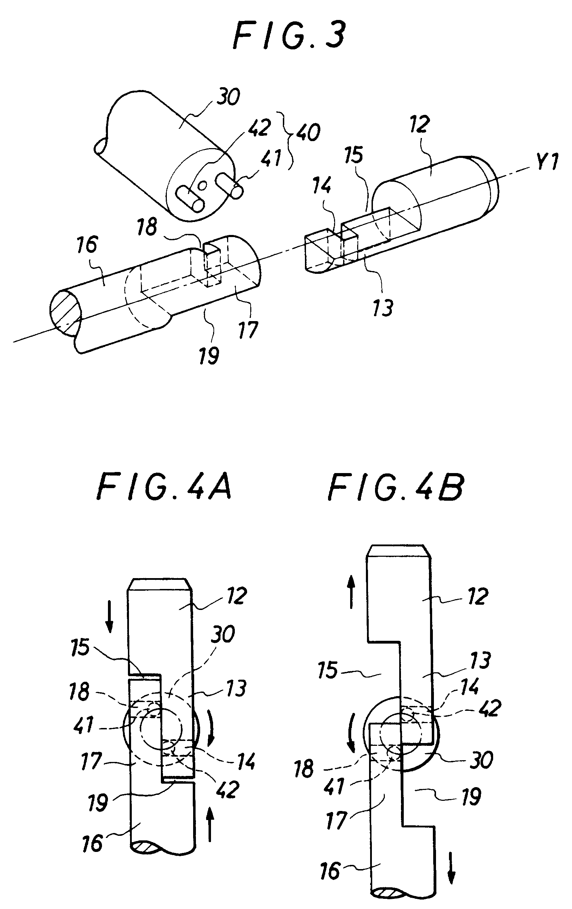

The first lock pins comprising the pair of lock pins 12 and 16 are so configured as to be combinable with first projection and retraction switching means 40. As shown in detail in Figs. 3 and 4, each of the lock pins 12 and 16 has an end portion to serve as an inward end portion. A part of each end portion corresponding to approximately 3/4 of the circumference thereof is cut off so that the lock pins 12 and 16 can overlap each other within a region at the same level.

Specifically, each end portion of the lock pin 12 (16) is formed with a notch space 15 (19) by cutting off a part of the end portion corresponding to approximately 3/4 thereof, the remaining part that corresponds to approximately 1/4 of the end portion constituting a projection 13 (17) of the lock pin 12 (16). The notch space 15 (19), partly defined by the projection 13 (17) of the lock pin 12 (16), is able to receive the projection 17 (13) of the other lock pin 16 (12). The projection 13 (17) of the lock pin 12 (16) is formed with a transverse groove 14 (18) to extend perpendicularly to the axis of the vertical hole 11V of the eccentric portion 11.

The transverse groove 14 (18) is able to receive a cam pin 42 (41) constituting a part of the first projection and retraction switching means 40. These cam pins 42 and 21 are attached to the forward (inward) end of a rotary member 30.

With the above configuration, when the rotary member 30 is rotated by approximately 140° in the counter-clockwise direction, as viewed in Fig. 4A, the first lock pins 12 and 16 move away from each other, that is, outward, as indicated by the associated arrows in Fig. 4B, so that the outward, or forward, end portions 12F and 16F of the first lock pins 12 and 16 are moved from the position shown in Fig. 1 to simultaneously enter the corresponding holes 21 and 23, respectively, of the eccentric sheave 20. This operation enables, together with the operation of second projection and retraction switching means described later, the eccentric sheave 20 to be shifted from a state of being fixed to the con'rod 3 to a state of being fixed to the eccentric portion 11.

The rotary member 30 constitutes a switching force transmitting means. As shown in Fig. 1, the rotary member 30 is rotatably fitted in a horizontal hole 11H formed in the crankshaft 10 about the axis Z1 of the crankshaft 10, and is capable of transmitting a switching force (rotative force), applied to an outer shaft portion 31 of the rotary member, to the first projection and retraction switching means 40 (i.e., 41 and 42) through an interior of the crankshaft 10.

The rotary position of the rotary member 30 indicates which of the shifted position the eccentric assumes, that is, whether the eccentric sheave 20 is locked to the eccentric portion 11 or the con'rod 3. The rotational position of rotary member 30 is detected by using a detection member 32 mounted on the outer shaft portion 31 and a first position detecting sensor 33 mounted to the stationary side.

The rotary member 30 is confined to or released from its rotational position by using fixing means and pressure media. In this example of the embodiment, the fixing means includes an ETP bush 35 (produced by Miki Pulley Kabushiki Kaisha) and a pressure screw (not shown). The pressure screw is operated suitably to cause the rotary member 30 to be fastened with or relieved from a friction force exerted by pressure media, including the bush 35, between an outer peripheral surface 31A of the outer shaft portion 31 of the rotary member 30 and an inner peripheral surface 36A of a flange 36 integrated with the crankshaft 10, whereby the rotary member 30 is confined or released.

A pair of lock pins 5, together constituting second lock pins, are received in the vertical hole 4 of the con'rod 3 at the upper end portion 3U thereof in such a manner that the second lock pins 5 are movable along the vertical axis (second common axis) Y2. The lock pins 5 have forward, or inward, end portions formed as tapered portions 6 tapered downward, as viewed in Fig. 1, and engageable with a similarly tapered portion 22 of the corresponding first hole 21 of the eccentric sheave 20. When the second lock pins 5 are pushed downward, that is, toward the press load application side, the tapered portions 6 are brought into engagement with tapered portions 22, thereby locking the eccentric sheave 20 to the con'rod 3.

The tapered portions 6 and 22 are formed in order to securely link the eccentric sheave 20 to the con'rod 3 without involving any play in the direction toward the press load application side.

When the eccentric sheave 20 is fixed to the con'rod 3, the eccentric sheave 20 moves together with the upper end portion 3U of the con'rod 3 At this time, since the eccentric sheave 20 needs to provide only a very small action of transmitting the rotational power of the crankshaft 10 (i.e., bear only a small load transmission torque), a high level of precision of a pressing operation can be more positively assured.

Second projection and retraction switching means 50 comprises a cylinder device 51 having piston rods 52 connected to the second lock pins 5. The entire means 50 is secured to an outer side of the upper end portion 3U of the con'rod 3 by a bolt 53, as shown in Fig. 2.

Pushing the piston rods 52 downward causes the eccentric sheave 20 to be locked to the con'rod 3 by the second lock pins 5, whereas drawing the piston rods 52 upward causes the eccentric sheave 20 to be released from that locked state. The position of the second lock pins 5 is detected by a second position detecting sensor having elements 55H and 55L facing the vertical hole 4 of the con'rod 3.

A bush 7 is fitted on the inner periphery of the eccentric sheave 20, while a bush 8 is fitted on the inner periphery of the upper end portion 3U of the con'rod 3. (Integrating the Eccentric Sheave with Eccentric Portion)

Before the integrating operation, the second lock pins 5 are in their position of being projected in the first hole 21 of the eccentric sheave 20 (this position of the lock pins 5. is represented by the lock pin 5 shown on the left side of the vertical line Y2 in Figs. 1 and 2). When the second lock pins 5 are in the above-described projected position, the first lock pins 12 and 16 are in their retracted position corresponding to the position shown in Fig. 4A.

In the integrating operation, a rotative force, acting in a certain direction, is applied from the outside of the crankshaft 10 to the outer shaft portion 31 of the rotary member 30 so that the rotary member 30, serving as the switching force transmitting means, rotates in the counter-clockwise direction, as viewed in Fig. 2 and Fig. 4A.

As the rotary member 30 rotates, the cam pins 42 and 41, serving as the first projection and retraction switching means, respectively cause the first lock pins 12 and 16 to move outward away from each other, as indicated by the associated arrows in Fig. 4B. As a result, the forward end portion 12F of the first lock pin 12 enters the corresponding first hole 21 of the eccentric sheave 20, and the forward end portion 16F of the other first lock pin 16 enters the corresponding second hole 23 of the eccentric sheave 20, whereby the eccentric sheave 20 becomes locked to the eccentric portion 11.

When the first position detecting sensor 33 has detected the resultant change in the rotational position of the rotary member 30, the second projection and retraction switching means 50 effects a releasing action, whereby the second lock pins 5 are drawn upward, and thus brought from the projected position (represented by the lock pin 5 shown on the left side of the vertical axis Y2 in Figs. 1 and 2) to the retracted position (represented by the lock pin 5 shown on the right side of the vertical axis Y2 in these figures).

The eccentric sheave 20 is now completely shifted to the position of being fixed to the eccentric portion 11 by the first lock pins 12 and 16. In this state, the eccentric sheave 20 is capable of bearing a great load transmission torque, and allowing the con'rod 3 to perform smooth swinging and reciprocating motion.

In this condition, the composite eccentricity amount equals the sum of eccentricities at maximum. As a result, the manner of operation effected has a great slide stroke and a low number of strokes per minute (SPM), with each sliding action taking place in accordance with the outer, large-diameter contour of the eccentric sheave 20. The operation can be performed with efficient SN and PV values.

### (Integrating the Eccentric Sheave to the Con'rod)

In this integrating operation, the piston rods 52 of the second projection and retraction switching means 50 presses the second lock pins 5 downward so that the second lock pins 5 are brought from the retracted position (shown on the right side of the vertical line Y2 in Figs. 1 and 2) to the projected position (shown on the left side of the same). As a result, the eccentric sheave 20 is locked to, and thus integrated with, the con'rod 3 with the tapered portions 6 of the second lock pins 5 pressing downward (toward the press load application side) against the tapered portions 22 of the corresponding first hole 21 of the eccentric sheave 20. The resultant change in the position of the second lock pins 5 is detected by the second position detecting sensor element 55L.

Thereafter, the rotary member 30 (the switching force transmitting means) is rotated in the opposite direction to the direction in the above operation, that is, in the clockwise direction, as viewed in Fig. 4B, whereby the cam pins 41, 42 (the first projection and retraction switching means 40) are brought to the position before the current integrating operation, as shown in Fig. 1. This operation causes the first lock pins 12 and 16 to be retracted from the corresponding holes, that is, the first and second holes 21 and 23, respectively, of the eccentric sheave 20.

The eccentric sheave 20 is now completely integrated with the con'rod 3 by virtue of the locking of the second lock pins 5 without any play in the direction toward the press load application side. In this condition, the composite eccentricity amount equals the eccentricity amount e1 of the eccentric portion 11 per se, thus achieving the minimum eccentricity amount of the system. Accordingly, the manner of operation provided has a small slide stroke and a high SPM.level.

At this time, the eccentric sheave 20, whose small-diameter inner periphery slides on the outer side (7) of the eccentric portion 11, needs to bear only a small load transmission torque, and the operation can be performed with efficient SN and PV values.

Thus, in the above-described embodiment, the eccentric portion 11 and the eccentric sheave 20 are disposed in such a manner as to be eccentric in the same direction, the eccentric-portion vertical hole 11V is provided to establish link between the eccentric portion 11 and the eccentric sheave 20, the con'rod vertical hole 4 and the eccentric-sheave first hole 21 are provided to establish link between the con'rod 3 and the eccentric sheave 20, the side of the eccentric portion 11 is provided with the first projection and retracting switching means 40 for projecting and retracting the first lock pins 12 and 16 as well as the switching force transmitting means 30, and the side of the con'rod 3 is provided with the second projection and retraction switching means 50 for projecting and retracting the second lock pins 5. Therefore, the slide stroke can be quickly and easily switched in two stages without changing the die height.

In the illustrated example of the embodiment, the vertical hole 11V of the eccentric portion 11 and the first hole 21 of the eccentric sheave 20, which holes are for projection and retraction of the first lock pins 12 and 16 from the former to the latter and vice versa, are formed coaxially with the vertical axis Y1 common to the above members 11 and 20, while the vertical hole 4 of the con'rod 3 and the first hole 21 of the eccentric sheave 20, which holes are for projection and retraction of the second lock pins 5 from the former to the latter and vice versa, are formed coaxially with the vertical axis Y2 common to the above members 3 and 20. This arrangement is advantageous in that the construction is simple, thereby enabling a great reduction in production costs. Further, the operation of replacing packings, etc. is not necessary, thereby enabling the apparatus to be easily handled.

The first projection and retraction switching means 40 has an opposing-pin structure capable of simultaneously switching the position of the pair of first lock pins 12 and 16, thereby enabling quick and reliable switching operations. Furthermore, the switching enables the eccentric sheave 20 to be securely fixed to the eccentric portion 11 in such a manner to be able to bear a great load transmission torque. The switching force transmitting means 30, which comprises a rotary member 30 passed through the inside of the crankshaft 11, enables a switching operation to be performed from the outside of the crankshaft 10. Thus, the switching mechanism requires a space of a smaller axial dimension than a conventional external-type switching mechanism.

The second projection and retraction switching means 50, comprising a cylinder device 51 connected to the second lock pins 5 and integrally secured to an outer side of the the con'rod 3, has only a short stroke for effecting integration and separation of the con'rod 3 with respect to the eccentric sheave 20. This arrangement also serves to enable quick and secure switching.

The forward end portions of the second lock pins 5 have tapered portions 6, while the corresponding first hole 21 of the eccentric sheave 20 has a tapered portion 22 at the end confronting the lock pins 5. This arrangement enables a secure link between the the con'rod 3 and the eccentric sheave 2, in which these members are pushed toward the press load application side in such a manner as to eliminate play in this direction. Thus, it is possible to perform a pressing operation with a high level of precision.

An operation of switching the slide stroke is performed in a condition in which the eccentric sheave 20 is locked to either the eccentric portion 11 or the con'rod 3 by either the first lock pin 12 (16) or the second lock pins 5. Thus, even in a switching operation, the eccentric sheave 20 is not brought to a free state. Accordingly, switching in two stages is possible without entailing a change in the die height.

The provision of the position detecting sensors 33, 55L and 55H enables a switching operation to be performed easily and reliably.

## Claims

1. An apparatus for adjusting the slide stroke of a press, said apparatus adjusting the slide stroke by changing the direction in which an eccentric portion (11) of a crankshaft (10) and an eccentric sheave (20) interposed between the crankshaft (10) and a con'rod (3) are eccentric, said apparatus comprising:
holes (11V, 4, 21, 23) having axes intersecting the axis of the crankshaft (10), said holes being formed in the eccentric portion (11) of said crankshaft (10), the eccentric sheave (20) and the con'rod (3), said eccentric portion (11) and said eccentric sheave (20) being disposed in such a manner as to be eccentric in the same direction, said holes being combined in such a manner that those holes formed in said eccentric portion (11) and said eccentric sheave (20) are coaxial with each other and those holes formed in said con'rod (3) and said eccentric sheave (20) are coaxial with each other;
first lock pins (12, 16) received in said hole (11V) of said eccentric portion (11) and capable of engaging with and disengaging from the corresponding holes (21, 23) of said eccentric sheave (20); and
second lock pins (5) received in said hole (4) of said con'rod (3) and capable of engaging with and disengaging from the corresponding hole (21) of said eccentric sheave (20), wherein
said first and second lock pins (12, 16, 5) are selectively engaged with the corresponding holes (21, 23) to adjust the stroke of said con'rod (3),
characterized in that said first lock pins (12, 16) are capable of being moved in the axial direction of said hole (11V) of said eccentric portion (11) by first projection and retraction switching means (40) provided in a horizontal hole (11H) formed in said crankshaft (10).

2. An apparatus according to claim 1, wherein said first lock pins (12, 16) comprise a pair of lock pins capable of simultaneously engaging with the two holes (21, 23) of said eccentric sheave (20) which correspond to said hole (11V) of said eccentric portion (11) of said crankshaft (10).

3. An apparatus according to claim 1, wherein said first lock pins (12, 16) comprise a pair of lock pins including inward end portions at which said lock pins overlap each other, said inward end portions being formed with notch spaces (15, 19) partly defined by projections (13, 17) of said lock pins (12, 16), each of said notch spaces (15, 19) receiving the projection (17, 13) of the other lock pin (16, 12), and each of said projections (17, 13) being formed with a transverse groove (18, 14) extending across the axis of said hole (11V) of said eccentric portion (11).

4. An apparatus according to claim 1, wherein said first projection and retraction switching means (40) comprise a pair of cam pins (42, 41) provided at an inner end of a rotary member (30) rotatably fitted in the horizontal hole (11H) formed in said crank shaft (10), said cam pins (42, 41) being fitted in transverse grooves (14, 18) of said first lock pins (12, 16).

5. An apparatus according to claim 4, wherein the rotational position of said rotary member (30) is detected by a first position detecting sensor (33) provided at an outer shaft portion (31) of said rotary member (30).

6. An apparatus according to any one of the preceding claims, wherein the rotational position of said rotary member (30) is controlled by fastening said rotary member (30) with or relieving said rotary member (30) from a friction force exerted by pressure media comprising a bush (35) provided on an outer end of an outer shaft portion (31) of said rotary member (30), an outer peripheral surface (31A) of said outer shaft portion (31) and a flange (36) integrated with said crankshaft (10).

7. An apparatus according to claim 1, wherein said second lock pins (5) are capable of being moved in the axial direction of said hole (4) of said con'rod (3) by second projection and retraction switching means (50) provided on said con'rod (3).

8. An apparatus according to claim 1 or 7, wherein said second lock pins (5) have end portions confronting said hole (21) of said eccentric sheave (20), said end portions being formed as tapered portions (6).

9. An apparatus according to claim 7 or 8, wherein said second projection and retraction switching means (50) comprises a cylinder device (51) having piston rods (52) connected to said second lock pins (5).

10. An apparatus according to any of claims 7 to 9, wherein the position of said second lock pins (5) is detected by a second position sensor (55H, 55L) facing the vertical hole (4) of said con'rod (3).

## Patentansprüche

1. Vorrichtung zum Einstellen des Stößelhubes an einer Presse, welche Vorrichtung den Stößelhub durch Ändern der Richtung einstellt, in der ein Exzenterabschnitt (11) einer Kurbelwelle (10) und eine Exzenterbüchse (20), die zwischen die Kurbelwelle (10) und eine Verbindungsstange (3) eingefügt ist, exzentrisch sind, enthaltend:
Bohrungen (11V,4,21,23) mit Achsen, die die Achse der Kurbelwelle (10) schneiden, welche Bohrungen im Exzenterabschnitt (11) der Kurbelwelle (10), in der Exzenterbüchse (20) und in der Verbindungsstange (3) ausgebildet sind, wobei der Exzenterabschnitt (11) und die Exzenterbüchse (20) derart angeordnet sind, daß sie in gleicher Richtung exzentrisch sind, wobei die Bohrungen derart miteinander kombiniert sind, daß jene Bohrungen, die in dem Exzenterabschnitt (11) und in der Exzenterbüchse (20) ausgebildet sind, zueinander koaxial sind, und jene Bohrungen, die in der Verbindungsstange (30) und in der Exzenterbüchse (20) ausgebildet sind, zueinander koaxial sind;
erste Verriegelungsstifte (12,16), die in der Bohrung (11V) des Exzenterabschnitts (11) aufgenommen und in der Lage sind, mit den entsprechenden Bohrungen (21,23) der Exzenterbüchse (20) in Eingriff gebracht und daraus gelöst zu werden; und
zweite Verriegelungsstife (5), die in der Bohrung (4) der Verbindungsstange (3) aufgenommen und in der Lage sind, mit der entsprechenden Bohrung (21) der Exzenterbüchse (20) in Eingriff gebracht und daraus gelöst zu werden, wobei
die ersten und zweiten Verriegelungsstifte (12,16,5) wahlweise mit den entsprechenden Bohrungen (21,23) in Eingriff gebracht sind, um den Hub der Verbindungsstange (3) einzustellen,
**dadurch gekennzeichnet**, daß die ersten Verriegelungsstifte (12,16) in der Lage sind, in axialer Richtung der Bohrung (11V) des Exzenterabschnitts (11) durch erste Vorschieb- und Rückzieh-Schalteinrichtungen (40) bewegt zu werden, die in einer in der Kurbelwelle (10) ausgebildeten horizontalen Bohrung (11H) angeordnet sind.

2. Vorrichtung nach Anspruch 1, bei der die ersten Verriegelungsstifte (12,16) ein Paar Verriegelungsstifte umfassen, die in der Lage sind, gleichzeitig mit den zwei Bohrungen (21,23) in der Exzenterbüchse (20) in Eingriff zu gelangen, die der Bohrung (11V) im Exzenterabschnitt der Kurbelwelle (10) entsprechen.

3. Vorrichtung nach Anspruch 1, bei der die ersten Verriegelungsstifte (12,16) ein Paar Verriegelungsstifte umfassen, die nach innen gerichtete Endabschnitte aufweisen, an denen die Verriegelungsstifte einander überlappen, wobei die nach innen gerichteten Endabschnitte mit Kerbausnehmungen (15,19) versehen sind, die teilweise von Vorsprüngen (13,17) der Verriegelungsstifte (12,16) begrenzt sind, wobei jeder der Kerbausnehmungen (15,19) den Vorsprung (17,13) des anderen Verriegelungsstiftes (16,12) aufnimmt und jeder der Vorsprünge (17,13) mit einer Quernut (18,14) versehen ist, die sich quer über die Achse der Bohrung (11V) des Exzenterabschnitts (11) erstreckt.

4. Vorrichtung nach Anspruch 1, bei der die erste Vorschieb- und Rückzieh-Schalteinrichtung (40) zwei Nockenstifte (42,41) aufweist, die am inneren Ende eines Drehelements (30) angeordnet sind, das drehbar in die in der Kurbelwelle (10) ausgebildete horizontale Bohrung (11H) eingepaßt ist, wobei die Nockenstifte (42,41) in die Quernuten (14,18) der ersten Verriegelungsstifte (12,16) eingreifen.

5. Vorrichtung nach Anspruch 4, bei der die Drehstellung des Drehelements (30) von einem ersten Positionsdetektorsensor (33) ermittelt wird, der an einem äußeren Wellenabschnitt (31) des Drehelements (30) angebracht ist.

6. Vorrichtung nach einem der vorhergehenden Ansprüche, bei der die Drehstellung des Drehelements (30) durch Festlegung des Drehelements (30) an oder Lösen des Drehelements (30) von einer Reibungskraft gesteuert wird, die durch Druckmittel aufgebracht wird, enthaltend eine Hülse (35) an einem äußeren Ende eines äußeren Wellenabschnitts (31) des Drehelements (30), eine Außenumfangsfläche (31A) des äußeren Wellenabschnitts (31) und einen Flansch (36), der integral mit der Kurbelwelle (10) ausgebildet ist.

7. Vorrichtung nach Anspruch 1, bei der die zweiten Verriegelungsstifte (5) in der Lage sind, in axialer Richtung der Bohrung (4) in der Verbindungsstange (3) durch zweite Vorschieb- und Rückzieh-Schalteinrichtungen (50) bewegt zu werden, die an der Verbindungsstange (3) vorgesehen sind.

8. Vorrichtung nach Anspruch 1 oder 7, bei der die zweiten Verriegelungsstifte (5) Endabschnitte aufweisen, die der Bohrung (21) in der Exzenterbüchse (20) gegenüberstehen und die als abgeschrägte Abschnitte (6) ausgebildet sind.

9. Vorrichtung nach Anspruch 7 oder 8, bei der die zweite Vorschieb- und Rückzieh-Schalteinrichtung (50) einen Zylinder (51) mit Kolbenstangen (52) enthält, die mit den zweiten Verriegelungsstiften (5) verbunden sind.

10. Vorrichtung nach einem der Ansprüche 7 bis 9, bei der die Stellung der zweiten Verriegelungsstifte (5) durch einen Positionssensor (55H,55L) ermittelt wird, der der vertikalen Bohrung (4) in der Verbindungsstange (3) gegenübersteht.

## Revendications

1. Un dispositif de réglage de la course du coulisseau d'une presse, ledit dispositif réglant la course du coulisseau en modifiant la direction dans laquelle une partie excentrée (11) d'une bielle-manivelle (10) et un manchon d'excentrique (20), interposé entre la bielle-manivelle (10) et une tige de liaison (3), sont excentrés, ledit dispositif comportant :
des alésages (11V, 4, 21, 23) dont les axes coupent l'axe de la bielle-manivelle (10), lesdits alésages étant formés dans la partie excentrée (11) de ladite bielle-manivelle (10), le manchon d'excentrique (20) et la tige de liaison (3), ladite partie excentrée (11) et ledit manchon d'excentrique (20) étant disposés de manière à être excentrés dans la même direction, lesdits alésages étant combinés de telle manière que ceux des alésages qui sont formés dans ladite partie excentrée (11) et ledit manchon d'excentrique (20) sont coaxiaux l'un par rapport à l'autre, et que ceux des alésages qui sont formés dans ladite tige de liaison (3) et ledit manchon d'excentrique (20) sont coaxiaux l'un par rapport à l'autre ;
des premières broches de verrouillage (12, 16) reçues dans ledit alésage (11V) de ladite partie excentrée (11) et capables de s'engager dans les alésages correspondants (21, 23) dudit manchon d'excentrique (20), et de s'en dégager ; et
des secondes broches de verrouillage (5) reçues dans ledit alésage (4) de ladite tige de liaison (3) et capables de s'engager dans l'alésage correspondant (21) dudit manchon d'excentrique (20), et de s'en dégager,
lesdites premières et secondes broches de verrouillage (12, 16, 5) étant sélectivement engagées dans les alésages correspondants (21, 23) pour ajuster la course de ladite tige de liaison (3),
caractérisé en ce que lesdites premières broches de verrouillage (12, 16) sont capables d'être déplacées dans la direction axiale dudit alésage (11V) de ladite partie excentrée (11) par des premiers moyens (40) de commande de déploiement et de rétraction prévus dans un alésage horizontal (11H) formé dans ladite bielle-manivelle (10).

2. Un dispositif selon la revendication 1, dans lequel lesdites premières broches de verrouillage (12, 16) comportent une paire de broches de verrouillage capables de pénétrer simultanément dans les deux alésages (21, 23) dudit manchon d'excentrique (20), qui correspondent audit alésage (11V) de ladite partie excentrée (11) de ladite bielle-manivelle (10).

3. Un dispositif selon la revendication 1, dans lequel lesdites premières broches de verrouillage (12, 16) comportent une paire de broches de verrouillage présentant des parties extrêmes intérieures par lesquelles lesdites broches de verrouillage se chevauchent l'une l'autre, lesdites parties extrêmes intérieures présentant des espaces à encoche (15, 19) partiellement définis par des saillies (13, 17) desdites broches de verrouillage (12, 16), chacun desdits espaces à encoche (15, 19) recevant la saillie (17, 13) de l'autre broche de verrouillage (16, 12), et chacune desdites saillies (17, 13) présentant une gorge transversale (18, 14) s'étendant transversalement à l'axe dudit alésage (11V) de ladite partie excentrée (11).

4. Un dispositif selon la revendication 1, dans lequel lesdits premiers moyens (40) de commande de déploiement et de rétraction comportent une paire de broches de came (42, 41) prévues à l'extrémité intérieure d'un élément tournant (30) placé de manière tournante dans l'alésage horizontal (11H) formé dans ladite bielle-manivelle (10), lesdites broches de came (42, 41) étant reçues dans les gorges transversales (14, 18) desdites premières broches de verrouillage (12, 16).

5. Un dispositif selon la revendication 4, dans lequel la position angulaire dudit élément tournant (30) est détectée par un premier détecteur (33) de détection de position prévu à la partie d'arbre extérieure (31) dudit élément tournant (30).

6. Un dispositif selon l'une quelconque des revendications précédentes, dans lequel la position angulaire dudit élément tournant (30) est commandée en assujettissant ledit élément tournant (30) par une force de friction, ou en libérant ledit élément tournant (30) de celle-ci, cette force de friction étant exercée par un agent de pression comportant une garniture (35) prévue sur l'extrémité extérieure d'une partie d'arbre extérieure (31) dudit élément tournant (30), une surface périphérique extérieure (31A) de ladite partie d'arbre extérieure (31) et un flasque (36) solidarisé de ladite bielle-manivelle (10).

7. Un dispositif selon la revendication 1, dans lequel lesdites secondes broches de verrouillage (5) sont capables d'être déplacées dans la direction axiale dudit alésage (4) de ladite tige de liaison (3) par les seconds moyens (50) de commande de déploiement et de rétraction prévus sur ladite tige de liaison (3).

8. Un dispositif selon la revendication 1 ou 7, dans lequel lesdites secondes broches de verrouillage (5) ont des parties extrêmes en regard dudit alésage (21) dudit manchon d'excentrique (20), lesdites parties extrêmes présentant des parties chanfreinées (6).

9. Un dispositif selon la revendication 7 ou 8, dans lequel lesdits seconds moyens (50) de commande de déploiement et de rétraction comportent un dispositif à vérin (51) comprenant des tiges de piston (52) reliées auxdites secondes broches de verrouillage (5).

10. Un dispositif selon l'une quelconque des revendications 7 à 9, dans lequel la position desdites secondes broches de verrouillage (5) est détectée par un second détecteur de position (55H, 55L) en regard de l'alésage vertical (4) de ladite tige de liaison (3).
